# EUROPEAN PATENT APPLICATION

(11) **EP 2 848 439 A1**
(43) Date of publication of application: **18.03.2015**
(21) Application number: 13788257.7
(22) Date of filing: 23.04.2013
(51) Int. Cl.: B60J 5/00

(54) **AUTOMOBILE DOOR REINFORCING MEMBER**

(30) Priority: 07.05.2012 JP 2012105806
(71) Applicant: JFE Steel Corporation, Tokyo 100-0011 (JP)
(72) Inventor: URABE, Masaki, Tokyo 100-0011 (JP)
(74) Representative: Stebbing, Timothy Charles
(86) International application number: PCT/JP2013/002749
(87) International publication number: WO 2013/168378

(57) **Abstract**

An automobile door impact beam includes a pipe-like member attached to a door of an automobile and reinforcing the door. The middle region including a middle part in the pipe longitudinal direction and having a length of 1/3 to 4/5 of the pipe total length has a flattened shape such that in the pipe axis orthogonality section, the diameter in the vehicle width direction is longer than the diameter in the vehicle height direction.

## Description

### Technical Field

The present invention relates to an automobile door impact beam that is attached to an automobile door to improve collision safety.

### Background Art

An automobile door impact beam (door beam) is a component that is installed in a door for the purpose of improving lateral collision safety of an automobile.

A conventional automobile door impact beam is generally a pipe having a circular uniform cross-sectional shape over the entire length that is attached to a door body using brackets as disclosed, for example, in Patent Literatures 1 and 2.

An automobile door impact beam is required to have the strength of the middle part in the longitudinal direction, and so a method in which a reinforcing material is put in a pipe to reinforce a part is disclosed in Patent Literature 3.

Patent Literature 4 discloses an automobile door impact beam in which the diameter of the middle part is increased, and the strength of the middle part is thereby increased.

### Citation List

### Patent Literature

Patent Literature 1: Japanese Unexamined Patent Application Publication No. 9-263127
Patent Literature 2: Japanese Unexamined Patent Application Publication No. 11-254969
Patent Literature 3: Japanese Unexamined Patent Application Publication No. 2008-6935
Patent Literature 4: Japanese Unexamined Patent Application Publication No. 11-321316

### Summary of Invention

### Technical Problem

An automobile door impact beam is required to have the following characteristics of:
having sufficient strength against collision of an object from the side of the automobile,
being capable of receiving impact from an early stage and performing sufficient energy absorption at the time of lateral collision,
having sufficient strength to suppress deformation of the door at the time of collision from the automobile longitudinal direction, and
being sufficiently lightweight.

In relation to strength against lateral collision, an automobile door impact beam is required to have high strength particularly in the middle part in the door longitudinal direction from the viewpoint of protecting the occupant. In addition, in order to receive impact from an early stage, an automobile door impact beam is preferably disposed close to the door outer panel.

An automobile door impact beam having a uniform cross-sectional shape such as those disclosed in Patent Literatures 1 and 2 is superior in ease of production, but from the viewpoint of strength against lateral collision and weight reduction, it cannot be said to have an optimum shape. That is, in order to increase the strength against lateral collision, the diameter of an automobile door impact beam needs to be increased over the entire length, and therefore, the weight is increased. That is, the impact beams disclosed in Patent Literatures 1 and 2 do not have a shape that can achieve strength against lateral collision and weight reduction. There is also a problem that if an impact beam has an uniform cross-section over the entire length and is straight, in relation to a door outer panel having a convex surface in the automobile width direction, the gap between the door outer panel and the automobile door impact beam is large in the middle part in the longitudinal direction of the automobile door impact beam, and the timing of receiving impact is delayed due to this gap.

In the case of putting a reinforcing member in the middle part in the longitudinal direction of a pipe forming an automobile door impact beam as disclosed in Patent Literature 3, the collision safety of the middle part is improved but the weight is increased due to the reinforcing member, and therefore, it is not possible to achieve both improvement of collision safety and weight reduction. The automobile door impact beam disclosed in Patent Literature 3 has an outer shape that is uniform in the longitudinal direction, and therefore, the effect of receiving impact from an early stage and performing sufficient energy absorption at the time of lateral collision cannot be expected.

In the case of increasing the diameter of the middle part of an automobile door impact beam as disclosed in Patent Literature 4, the weight is increased due to the increased diameter, and as with Patent Literature 3, it is not possible to achieve both improvement of collision safety and weight reduction.

The automobile door impact beam described in Patent Literature 4 has a complex shape such that tapered regions are provided between the middle part having a large diameter and end parts, and therefore, there is also a problem that the production cost increases.

As described above, none of the conventional automobile door impact beams have both performances of improvement of collision safety and weight reduction. None of the conventional automobile door impact beams have, in addition to these performances, the performance of being capable of receiving impact from an early stage and performing sufficient energy absorption at the time of lateral collision, and the performance of suppressing deformation of the door due to collision in the automobile longitudinal direction.

The present invention has been made to solve such problems, and it is an object of the present invention to obtain an automobile door impact beam having both performances of improvement of collision safety and weight reduction, and to obtain an automobile door impact beam having, in addition to these performances, the performance of being capable of receiving impact from an early stage and performing sufficient energy absorption at the time of lateral collision, and the performance of suppressing deformation of the door due to collision in the automobile longitudinal direction.

### Solution to Problem

In an automobile door impact beam, a region that most requires collision strength is the middle part in the longitudinal direction, and the required strength decreases as the distance from the middle part.

In this regard, in Patent Literature 3, the strength of the middle part is increased by means of inserting a reinforcing member into the middle part, and in Patent Literature 4, the strength of the middle part is increased by means of increasing the diameter of the middle part.

However, as described above, neither means can achieve both improvement of collision safety and weight reduction.

As a result of search for the reason for this, it is thought that the reason is that in the conventional arts, regardless of the direction of action of the collision force, the strength over the entire radial direction of the pipe axis orthogonality section of the middle part of the automobile door impact beam is increased. An automobile door impact beam is required to have high strength in the middle part thereof. However, the required strength is the strength against the collision load from the vehicle width direction of the cross section of the middle part, and the strength in the vehicle height direction does not necessarily have to be high.

So, the inventor thinks that by forming in a shape such that the geometrical moment of inertia in the vehicle width direction is higher than that in the vehicle height direction, both improvement of collision safety and weight reduction can be achieved.

Further, by adopting a shape such that the geometrical moment of inertia in the vehicle width direction is higher than that in the vehicle height direction, the middle part bulges toward the door outer panel, therefore the automobile door impact beam can be disposed closer to the door outer panel, and collision energy can be absorbed from an earlier stage.

The present invention is made based on such an idea, and specifically, the present invention is composed of the following configuration.
(1) An automobile door impact beam comprising a pipe-like member attached to a door of an automobile and reinforcing the door, wherein the middle region including a middle part in the pipe longitudinal direction and having a length of 1/3 to 4/5 of the pipe total length has a flattened shape such that in the pipe axis orthogonality section, the diameter in the vehicle width direction is longer than the diameter in the vehicle height direction.
(2) The automobile door impact beam according to (1), wherein the flattened shape becomes less flattened toward the pipe ends.
(3) The automobile door impact beam according to (1) or (2), wherein the flattened shape has an elliptical pipe axis orthogonality section.
(4) The automobile door impact beam according to any one of (1) to (3), wherein center positions of pipe axis orthogonality sections are located on the same straight line.
(5) The automobile door impact beam according to any one of (1) to (3), wherein the flattened shape is such that in the pipe axis orthogonality section, the length of the diameter in the vehicle width direction is less than or equal to three times and more than one times the length of the diameter in the vehicle height direction.
(6) The automobile door impact beam according to any one of (1) to (3), formed by pressing a pipe-like member having a circular pipe axis orthogonality section from above and below.

### Advantageous Effects of Invention

In the present invention, an automobile door impact beam includes a pipe-like member attached to a door of an automobile and reinforcing the door. A region including a middle part in the pipe longitudinal direction and having a length of at least 1/3 of the pipe total length has a flattened shape such that in the pipe axis orthogonality section, the diameter in the vehicle width direction is longer than the diameter in the vehicle height direction. Therefore, both improvement of collision safety and weight reduction can be achieved, and collision energy can be absorbed from an early stage at the time of collision.

### Brief Description of Drawings

[Fig. 1] Fig. 1 is a perspective view of an automobile door impact beam according to the embodiment.
[Fig. 2] Fig. 2 is an explanatory diagram illustrating positional relationship of the automobile door impact beam according to the embodiment in attached state.
[Fig. 3] Fig. 3 is an explanatory diagram illustrating a manufacturing method of the automobile door impact beam according to the embodiment.
[Fig. 4] Fig. 4 is an explanatory diagram illustrating an automobile door impact beam manufactured by the manufacturing method of Fig. 3.
[Fig. 5] Fig. 5 is an explanatory diagram illustrating an experimental object material in an example (1).
[Fig. 6] Fig. 6 is an explanatory diagram illustrating an experimental method in the example.
[Fig. 7] Fig. 7 is an explanatory diagram illustrating advantageous effects of the example (1).
[Fig. 8] Fig. 8 is an explanatory diagram illustrating an experimental object material in an example (2).
[Fig. 9] Fig. 9 is an explanatory diagram illustrating advantageous effects of the example (2).

### Description of Embodiments

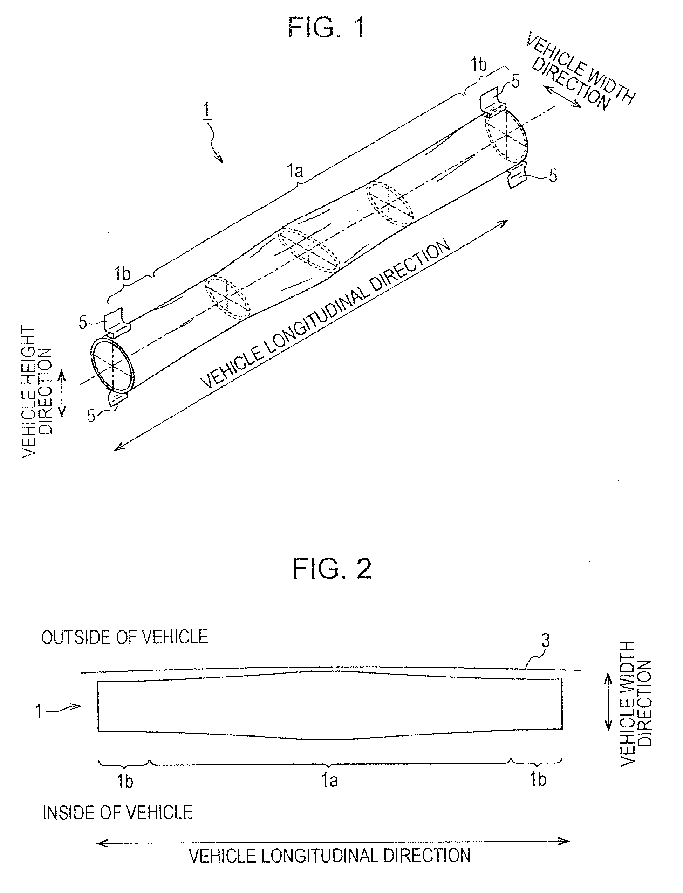

An automobile door impact beam 1 according to the embodiment will be described with reference to Fig. 1 to Fig. 4.

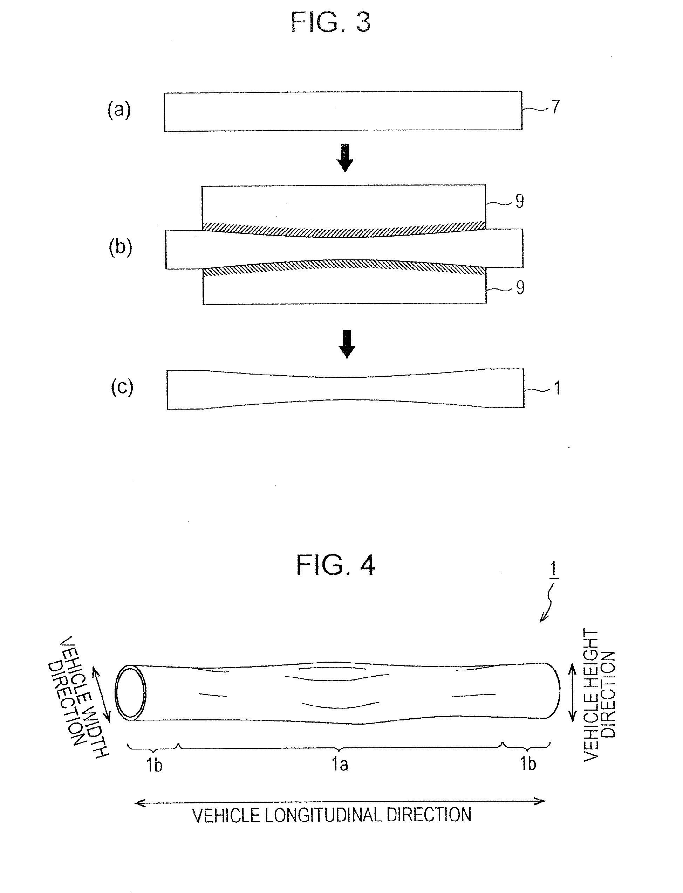

The automobile door impact beam 1 according to the embodiment is composed of a pipe-like member as shown in Fig. 1. When the automobile door impact beam 1 is divided into three parts: a middle part 1a and both end parts 1b in the pipe longitudinal direction (vehicle longitudinal direction), the length of the middle part 1a is 1/3 or more of the total length (see Fig. 4). As shown in Fig. 1, Fig. 2, and Fig. 4, the middle part 1a has a cross-sectional shape such that in the pipe axis orthogonality section, the diameter in the vehicle width direction is larger than the diameter in the vehicle height direction, and the middle part bulges toward the door outer panel 3 (is located closer to the door outer panel 3) than both end parts.

As shown in Fig. 1, both end parts 1b have attachment brackets 5 for attachment to the door body.

The cross-sectional shape of the automobile door impact beam 1 will be described below.

### <Middle part 1a>

As shown in Fig. 1 and Fig. 4, the middle part 1a is most flattened in the middle part in the pipe longitudinal direction or the vicinity including the middle part, and becomes less flattened toward the end parts 1b, and the cross-sectional shape of the end parts 1b is circular.

Since the middle part 1a has a flattened shape such that the diameter in the vehicle width direction is larger than the diameter in the vehicle height direction, the collision strength in the vehicle width direction is high compared to a member having a circular cross-section that has the same circumferential length and the same weight per unit length. That is, the length in the vehicle width direction is more than one times the length in the vehicle height direction. The reason is that the geometrical moment of inertia in the vehicle width direction is high compared to the case of a circle.

If the collision strength in the vehicle width direction is the same, the automobile door impact beam of the embodiment is reduced in thickness or circumferential length (cross-sectional area), and weight reduction of the member becomes possible.

In general, the cross-sectional shape of an automobile door impact beam changes at the time of collision, and with this change, a decrease in geometrical moment of inertia, that is, a decrease in collision strength occurs. In this respect, since the automobile door impact beam 1 of the embodiment has a flattened cross-sectional shape, the change in cross-sectional shape when subjected to a load in the vehicle width direction is less likely to occur compared to the circular cross-sectional shape, and therefore, the strength is less likely to decrease.

If the automobile door impact beam 1 is too flattened in the vehicle width direction, buckling is likely to occur in the vehicle height direction. For this reason, the length in the vehicle width direction is preferably less than or equal to three times the length in the vehicle height direction.

In a case where in order to secure the stiffness of the automobile door, the door outer panel 3 (see Fig. 2) and the automobile door impact beam 1 are bonded with mastic sealer, a part of the automobile door impact beam 1 on the door outer panel 3 side is preferably flat to some extent. In this respect, if the automobile door impact beam 1 is too flattened, the ends in the lateral direction are acute, and therefore, also in this respect, the length in the vehicle width direction is preferably less than or equal to three times the length in the vehicle height direction. More preferably, the length in the vehicle width direction is more than or equal to 1.5 times and less than or equal to 2.5 times the length in the vehicle height direction.

It is more preferable that the cross-sectional shape be symmetrical in the vehicle height direction because the deformation in the vehicle height direction can be suppressed, and the impact absorbing performance can be secured.

Although, in Fig. 1 of the embodiment, the length of the middle part 1a is 4/5 of the total length of the automobile door impact beam 1, the length of the middle part 1a only has to be at least 1/3 of the total length. The reason why the length of the middle part 1a needs to be at least 1/3 of the total length is as follows.

If another automobile or the like collides from the side, since there is a framework of the vehicle body in front and rear of the automobile door, the load is received by the framework in front and rear of the door. On the other hand, since there is no framework in the middle part of the door, the load is received exclusively by the automobile door impact beam 1, and the occupant needs to be protected by this. In order for the automobile door impact beam 1 to fulfill such a function, at least 1/3 of the total length needs to have increased collision strength against the load in the vehicle width direction.

### <End parts 1b>

The cross-sectional shape of the end parts 1b is circular as shown in Fig. 1 and Fig. 4. The reason for this is as follows.

In some cases, the door outer panel 3 is curved convexly in the vehicle width direction as shown in Fig. 2. In such cases, by making only the middle part 1a have a flattened cross-sectional shape and a shape bulging toward the door outer panel 3, and making the end parts 1b have a circular cross-sectional shape, the automobile door impact beam 1 can be attached so as to conform to the curved surface shape of the door outer panel 3, and the gap between the door outer panel 3 and the middle part 1a can be reduced. Therefore, in the case where the middle part of an automobile door is subjected to a collision, collision energy can be absorbed by the middle part 1a from an earlier stage of collision.

The door outer panel 3 is generally curved toward the outside of the vehicle as viewed in the vehicle height direction. On the other hand, in some cases, the automobile door impact beam is attached not horizontally but obliquely.

In such cases, if the automobile door impact beam has the same cross-sectional shape in the axial direction, a gap is formed between the door outer panel and the automobile door impact beam.

In this regard, as in the automobile door impact beam 1 of the embodiment, by making only the middle part 1a have a shape bulging toward the door outer panel 3, and making the end parts 1b have a circular cross-sectional shape, the gap with the door outer panel 3 in the middle part of the door can be reduced, and as with the above case, collision energy can be absorbed from an earlier stage of collision.

By making the end parts 1b have a circular cross-sectional shape, the end parts 1b are made inferior in collision safety against the load in the vehicle width direction to the middle part 1a. However, since there is a framework of the vehicle body in front and rear of the automobile door, the required collision strength of the automobile door impact beam 1 decreases as the distance from the middle, and therefore there is no problem.

As described above, the automobile door impact beam 1 of the embodiment has the effect of improving the strength against collision load (collision strength) in the vehicle width direction in the middle part 1a, and has the effect of being capable of reducing weight, being installed such that the gap with the door outer panel 3 is small, and being capable of absorbing collision energy from an early stage at the time of collision.

Further, in the automobile door impact beam 1 of the embodiment, as shown in Fig. 1, the center positions of pipe axis orthogonality sections are located on the same straight line when viewed in the longitudinal direction. Therefore, the automobile door impact beam 1 is less likely to buckle, even in a case where a collision load in the vehicle longitudinal direction is applied. Therefore, the automobile door impact beam 1 has the effect of being capable of suppressing the deformation of the automobile door, and being capable of effectively performing load transmission in the vehicle longitudinal direction.

Next, an example of a manufacturing method of the above-described automobile door impact beam 1 will be described with reference to Fig. 3 below. As shown in Fig. 3, a normal pipe-like member 7 having a circular cross-sectional shape (see Fig. 3 (a)) is prepared as a material, this is pressed from above and below using a press machine (not shown) and press dies 9 (see Fig. 3 (b)), and thus an automobile door impact beam 1 can be easily formed (see Fig. 3 (c)).

In an example of the embodiment, upper and lower press dies 9 having the same shape are used, and the press surface is arcuate in elevational view as shown in Fig. 3 (b). The upper press die 9 is convex downward, and the lower press die 9 is convex upward.

The length of the arcuate part of the press dies 9 (the linear distance from one end of the arc to the other end) is 4/5 of the total length of the pipe-like member 7 as a material in this example.

By pressing the pipe-like member 7 from above and below using the press dies 9, a part of the middle part of the pipe-like member 7 corresponding to the apex of the arc is most pressed and made to have a significantly flattened cross-sectional shape, and the cross-sectional shape of the middle part of the pipe-like member 7 gradually becomes less flattened elliptical toward the end parts 1b. In this way, the middle part 1a of the automobile door impact beam 1 is formed.

Fig. 4 shows the shape of the automobile door impact beam 1 after press forming as viewed obliquely from above. The part pressed by the press dies 9 is the middle part 1a, which gradually becomes less flattened toward the end parts 1b, and the length of the middle part 1a is 4/5 of the total length in this example. Both end parts 1b have a circular cross-sectional shape as shown in Fig. 4.

Attachment brackets 5 are appropriately fixed by welding to the automobile door impact beam 1 press-formed in this way (see Fig. 1).

As described above, according to the manufacturing method of an automobile door impact beam 1 of the present embodiment, an automobile door impact beam 1 can be easily manufactured.

Although, in the embodiment described above, the length of the middle part 1a is 1/3 to 4/5 of the total length, and both end parts 1b have a circular cross section, the automobile door impact beam 1 may have a cross-sectional shape such that the diameter in the vehicle width direction is larger than the diameter in the vehicle height direction over the entire length, and the middle part bulges toward the door outer panel 3 more significantly than both end parts.

In the above embodiment, examples of a flattened shape such that the diameter in the vehicle width direction is larger than the diameter in the vehicle height direction may include an elliptical shape and an oval shape flattened in the vehicle width direction.

### EXAMPLES

Effects of the automobile door impact beam 1 of the present invention will be described with reference to specific examples.

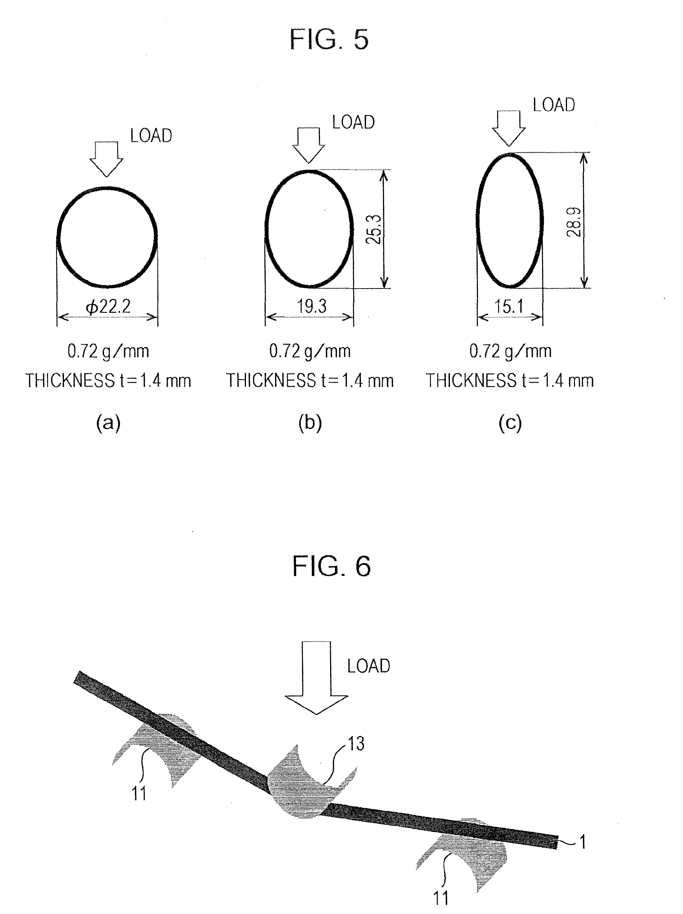

First, verification experiments on the improvement of collision strength in the vehicle width direction due to the fact that the cross-sectional shape of the middle part 1a is an elliptical cross-sectional shape were carried out on three shapes: shape a, shape b, and shape c shown in Fig. 5.

Shape a was a pipe-like member 7 as a material, and was a perfect circle cross-sectional shape having a diameter of 22.2 mm as shown in Fig. 5 (a).

Shape b was obtained by flattening shape a, and was an elliptical cross-sectional shape having a major axis of 25.3 mm and a minor axis of 19.3 mm as shown in Fig. 5 (b).

Shape c was obtained by further flattening shape b, and was an elliptical cross-sectional shape having a major axis of 28.9 mm and a minor axis of 15.1 mm as shown in Fig. 5(c).

Thus, shape b and shape c are formed based on the cross-sectional of shape a, the weight per unit length of each shape is substantially constant (0.72 g/mm).

On each of shapes a to c, a test in which as shown in Fig. 6, in a state of being supported at predetermined intervals by supporters 11, a load is applied to the center in the longitudinal direction from above by a punch 13, was carried out to determine the collision strength. In the case of an elliptical cross-sectional shape (shape b, shape c), on the assumption of the collision load in the vehicle width direction in a state being attached to an automobile door, supporting was performed with the major axis of the cross-sectional shape vertical, so that the loading direction corresponds to the major axis direction (see arrows in Fig. 5). In the test, calculation was performed using finite element analysis software (LS-DYNA version 971 developed by LSTC) and using a dynamic explicit method.

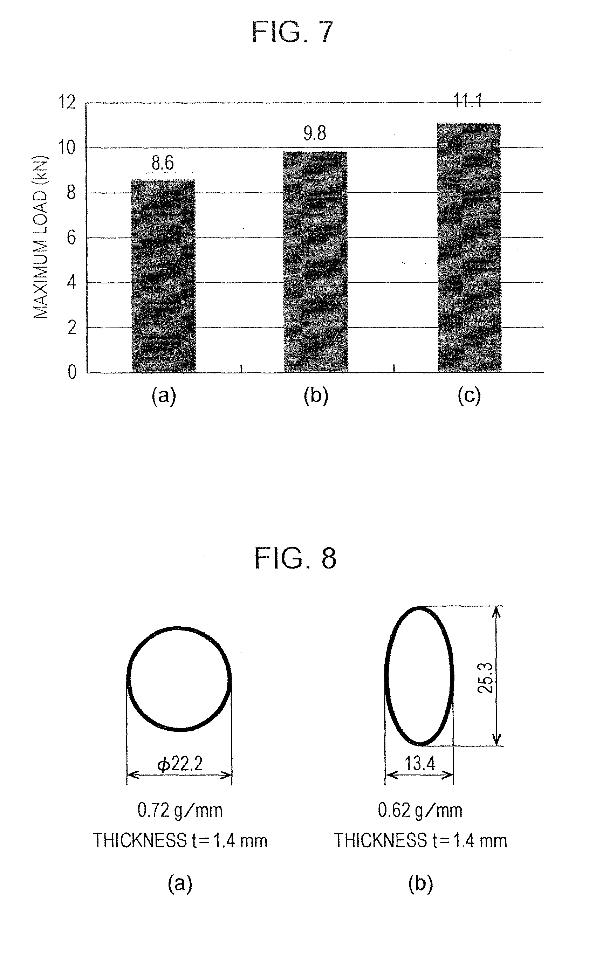

The test results are shown in Fig. 7. Fig. 7 is a diagram illustrating the maximum load of each shape. In Fig. 7, the horizontal axis shows each shape of Fig. 5, and the vertical axis shows maximum load (kN).

As shown in Fig. 7, the maximum load of shape a is 8.6 kN, the maximum load of shape b is 9.8 kN, and the maximum load of shape c is 11.1 kN. From this, it was demonstrated that in a case where weight per unit length is constant, collision strength is improved by making the middle part 1a have a flattened shape such that in the pipe axis orthogonality section, the diameter in the vehicle width direction is larger than the diameter in the vehicle height direction.

Further, from the fact that shape c shows a higher value than that of shape b, it was demonstrated that collision strength is improved by making the major axis of the pipe axis orthogonality section long compared to the minor axis.

From the above test, it was demonstrated that even if the weight per unit length is constant, the collision strength is improved by having an elliptical cross-section having a flattened shape such that the diameter in the vehicle width direction is larger than the diameter in the vehicle height direction. In addition, from the test results, it can be seen that if a flattened shape such that the diameter in the vehicle width direction is larger than the diameter in the vehicle height direction (for example, an elliptical cross-section) is adopted, weight reduction can be achieved, while maintaining collision strength comparable to that of a conventional one having a circular cross-section, by reducing the thickness or diameter (cross-sectional area) of a pipe-like member 7 as a material for an automobile door impact beam 1.

In order to specifically confirm this point, reducing the diameter of a pipe-like member 7 as a material without changing the thickness (thickness t = 1.4 mm) to reduce the weight while maintaining collision strength comparable to that of the above shape a, was considered.

As a result of consideration, the shape shown in Fig. 8(b) was assumed as an elliptical shape. The weight per unit length of this shape is 0.62 g/mm, and is lighter by about 14% than 0.72 g/mm of shape a (see Fig. 8 (a)).

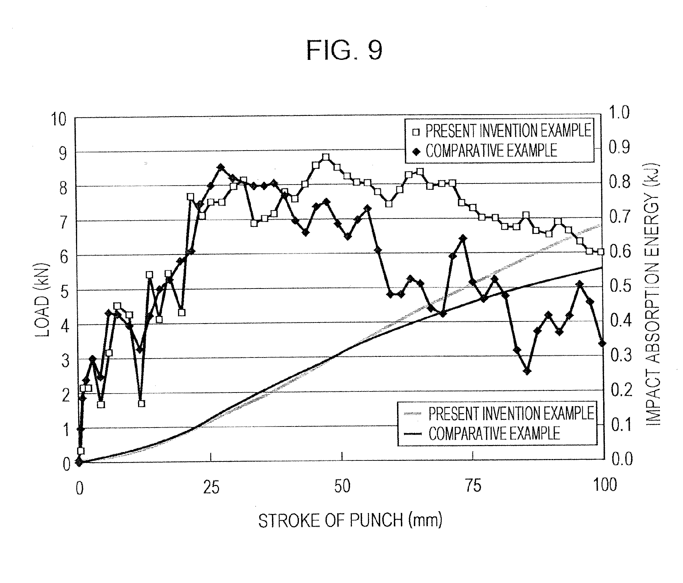

On a member having the shape shown in Fig. 8 (b), a test on collision strength similar to that shown in Fig. 6 was carried out. The test results are shown in Fig. 9. In Fig. 9, the horizontal axis shows the stroke of the punch 13 (mm), the left vertical axis shows load (kN), and the right vertical axis shows impact absorption energy (kJ). In the figure, line graphs having plots of white squares or black rhombi show the load of each stroke, the white squares show present invention example (Fig. 8 (b)), and the black rhombi show comparative example (Fig. 8 (a)). On the other hand, graphs represented by a gray line or a black line show the impact absorption energy of each stroke, the gray line shows present invention example (Fig. 8 (b)), and the black line shows comparative example (Fig. 8(a)).

With regard to the load of each stroke, when the stroke is about 40 mm or more, the present invention example shows a higher value than that of comparative example. From this, present invention example requires a large load to increase the stroke, and has high collision strength.

With regard to the absorbed energy of each stroke, it can be seen that when the stroke is less than about 55 mm, present invention example and comparative example are almost equal, and when the stroke is about 55 mm or more, present invention example exceeds comparative example and absorbs more energy.

From the above, it was demonstrated that according to the present invention, weight reduction of an automobile door impact beam 1 can be achieved while maintaining the collision strength.

### Reference Signs List

- 1: automobile door impact beam
- 3: door outer panel
- 5: attachment bracket
- 7: pipe-like member
- 9: press die
- 11: supporter
- 13: punch

## Claims

1. An automobile door impact beam comprising:
a pipe-like member attached to a door of an automobile and reinforcing the door,
wherein the middle region including a middle part in the pipe longitudinal direction and having a length of 1/3 to 4/5 of the pipe total length has a flattened shape such that in the pipe axis orthogonality section, the diameter in the vehicle width direction is longer than the diameter in the vehicle height direction.

2. The automobile door impact beam according to Claim 1, wherein the flattened shape becomes less flattened toward the pipe ends.

3. The automobile door impact beam according to Claim 1 or 2, wherein the flattened shape has an elliptical pipe axis orthogonality section.

4. The automobile door impact beam according to any one of Claims 1 to 3, wherein center positions of pipe axis orthogonality sections are located on the same straight line.

5. The automobile door impact beam according to any one of Claims 1 to 3, wherein the flattened shape is such that in the pipe axis orthogonality section, the length of the diameter in the vehicle width direction is less than or equal to three times and more than one times the length of the diameter in the vehicle height direction.

6. The automobile door impact beam according to any one of Claims 1 to 3, formed by pressing a pipe-like member having a circular pipe axis orthogonality section from above and below.
